# EUROPEAN PATENT SPECIFICATION

(11) **EP 2 154 424 B1**
(45) Date of publication and mention of the grant of the patent: **27.02.2013**
(21) Application number: 08765365.5
(22) Date of filing: 10.06.2008
(51) Int. Cl.: H01J 61/32, H01J 61/34, H01J 61/35

(54) **Compact fluorescent lamp with diffusion film**
Kompaktfluoreszenzlampe mit Diffusionsfilm
Lampe fluorescente compacte avec film de diffusion

(30) Priority: 11.06.2007 JP 2007153827
(43) Date of publication of application: 17.02.2010
(73) Proprietor: OSRAM GmbH, 81543 München (DE)
(72) Inventor: KONOMOTO, Takahiro, Yokohama-shi Kanagawa 220-0004 (JP); OSAWA, Takashi, Yokohama-shi Kanagawa 220-0004 (JP); NISHIO, Hironori, Yokohama-shi Kanagawa 220-0004 (JP)
(86) International application number: PCT/JP2008/060575
(87) International publication number: WO 2008/153008

(56) References cited:
- WO-A2-2006/006097
- JP-A- 8 017 222
- JP-A- 08 017 222
- JP-A- 2002 124 102
- JP-A- 2002 124 102
- JP-A- 2002 358 804
- JP-A- 2006 100 107
- US-A1- 2006 176 429

## Description

### TECHNICAL FIELD

The present invention relates to a compact fluorescent lamp which accommodates a light emitting tube in an outer tube globe.

### BACKGROUND ART

Recently, the compact fluorescent lamp is miniaturized to an extent corresponding to a general electrical light bulb, and needs to replace the light source of the general electrical light bulb equipment is advancing.

As one example of the compact fluorescent lamp, that in which the discharge path is made long by bending the light emitting tube to a spiral form and the fluorescent lamp is miniaturized is proposed (see, e.g., patent document 1).

The compact fluorescent lamp includes an outer tube globe for accommodating the spiral shaped light emitting tube. The visible light radiated from the spiral shaped light emitting tube is diffused so as to be seen as the electrical light bulb, and thus an diffusion film is applied on the inner surface of the outer tube globe to cut the ultraviolet light radiated from the spiral shaped light emitting tube.
Patent document 1: Japanese Unexamined Patent application Publication No. 2003-263972
JP 2002-124102 discloses a compact fluorescent lamp having a light emitting tube accommodated in an outer tube globe and a diffusion film for absorbing ultraviolet light arranged on the inner surface of the outer tube globe. US 2006/176429 A1 discloses a diffusing structure with ultraviolet absorbing properties. JP 8-017222 discloses a compact fluorescent lamp having a light emitting tube accommodated in an outer tube globe and a diffusion film containing metal oxide particles for absorbing ultraviolet light and inorganic fine particles for scattering visual light is arranged on the inner surface of the outer tube globe. WO 2006/006097A2 discloses a compact fluorescent lamp having an outer envelope coated with a light-refraction layer comprising UV-absorbing refractive material with a high refractive index.

### DISCLOSURE OF THE INVENTION

In the compact fluorescent lamp applied with the diffusion film on the inner surface of the outer tube globe of the prior art, the diffusion film is applied as thin as possible since the transmissivity of visible light lowers if the diffusion film is thick. If the diffusion film is thinly applied, however, the skin failure tends to easy occur and the commercial value tends to lower.

In view of solving the above problems, it is an object of the present invention to provide a compact fluorescent lamp having a diffusion film applied to the inner surface of the outer tube globe, in which the ultraviolet light transmissivity is lower than or equal to 25% and the visible light transmissivity is greater than or equal to 95%, without increasing the skin failure rate of the film.

The object of the invention is achieved by a compact fluorescent lamp as claimed in claim 1.

The compact fluorescent lamp according to the present invention has an effect of having the ultraviolet light transmissivity of lower than or equal to 25% and the visible light transmissivity of greater than or equal to 95% without increasing the skin failure rate of the film by having the average particle diameter of SiO₂ at 1 or 5 µm.

### BRIEF DESCRIPTION OF THE DRAWINGS

Fig. 1 is a view showing a first embodiment and front view of a compact fluorescent lamp 1;
Fig. 2 is a view showing the first embodiment and is a cross sectional view along the line A-A; and
Fig. 3 is a view showing the first embodiment and is a view showing a measurement result of a visible light transmissivity and an ultraviolet light transmissivity of when the film thickness of the diffusion film and the average particle diameter of SiO₂ are changed.

### DESCRIPTION OF THE NUMERALS

- 1: compact fluorescent lamp
- 2: spiral shaped light emitting tube
- 2a: projection
- 3: stabilizer
- 4: housing
- 5: mouth ring
- 6: outer tube globe
- 8: plate
- 9: substrate
- 10: silicon resin
- 20: diffusion film

### BEST MODES FOR CARRYING OUT THE INVENTION

(Embodiment 1)

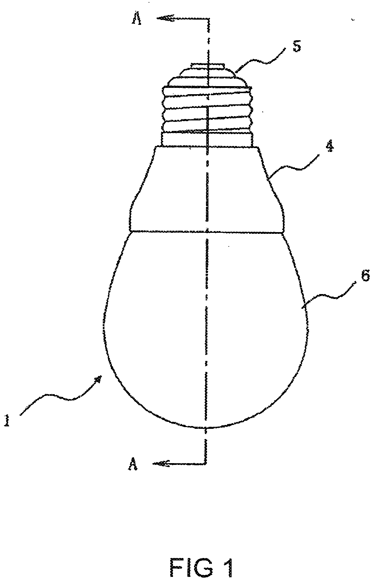

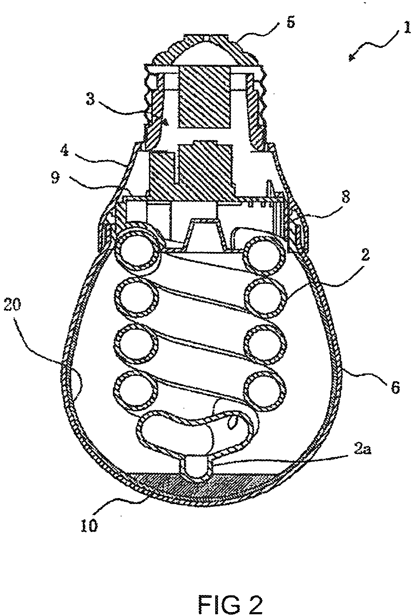

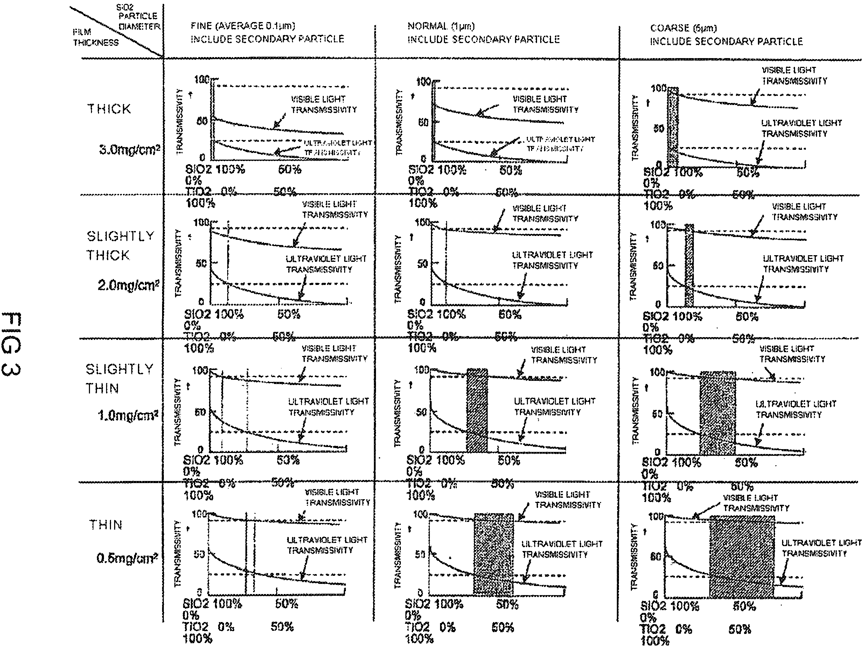

Fig. 1 to Fig. 3 are views showing a first embodiment. Fig. 1 is a front view of a compact fluorescent lamp 1, Fig. 2 is a cross sectional view along the line A-A, and Fig. 3 is a view showing a measurement result of a visible light transmissivity and an ultraviolet light transmissivity of when the film thickness of the diffusion film and the average particle diameter of SiO₂ are changed.

The outer appearance of a compact fluorescent lamp 1 (sometimes referred to as lamp herein) will be described with Fig. 1. The compact fluorescent lamp 1 is an example of an electronic A shape. The compact fluorescent lamp 1 includes a resin housing 4 having a mouth ring 5 (E26) with an electric connecting part with a socket (not shown) arranged at one end, and a glass outer tube globe 6 interiorly accommodating a spiral shaped light emitting tube 2 (one example of light emitting tube) and being joined to the other end of the housing 4. A diffusion film (to be hereinafter described) for diffusing the light emitted from a spiral shaped light emitting tube 2 is formed on an inner surface of the outer tube globe 6, so that the interior of the outer tube globe 6 cannot be seen.

The configuration of the interior of the compact fluorescent lamp 1 will be described with Fig. 2. The compact fluorescent lamp 1 has the electrode side end of the spiral shaped light emitting tube 2 inserted to a plate 8 and fixed to the plate 8 by an adhesive such as silicon. Mercury is sealed in the spiral shaped light emitting tube 2 by a predetermined amount in a simple form. Mixed gas of argon or other noble gas is sealed from an exhaust tube (not shown) as buffer gas.

A substrate 9 is attached to the surface (mouth ring side) on the side opposite to the spiral shaped light emitting tube 2 of the plate 8. Various electronic components are mounted on the substrate 9. A stabilizer 3 (lighting circuit) for lighting the spiral shaped light emitting tube 2 is configured by the various electronic components.

The plate 8 attached with the spiral shaped light emitting tube 2 and the substrate 9 is attached to the interior of the housing 4 by fitting or adhering. A gap is formed between the housing 4 and the plate 8 at the opening side (side opposite to mouth ring 5) of the housing 4. The opening side end of the outer tube globe 6 is inserted to the relevant gap, and the outer tube globe 6 is securely attached to the housing 4 and the plate 8 with adhesive such as silicon resin.

A projection 2a of the spiral shaped light emitting tube 2 is securely fixed to the outer tube globe with a silicon resin 10 etc.

A diffusion film 20 is applied substantially the entire inner surface of the outer tube globe 6. The present embodiment has features in the diffusion film 20.

The light outwardly emitted from the spiral shaped light emitting tube 2 includes visible light having a wavelength of 380nm to 780nm, an ultraviolet light having a wavelength of lower than or equal to 380nm, and an infrared light having a wavelength of greater than or equal to 780nm. The percentage is about 25% visible light, about 1% ultraviolet light, and the rest infrared light.

The following matters are required for the diffusion film 20 applied to the inner surface of the outer tube globe 6.
(1) The visible light is to be transmitted as much as possible. For example, the transmissivity of visible light is to be greater than or equal to 95%.
(2) The interior of the outer tube globe 6 is required to appear similar to the electric light bulb. The visible light outwardly radiated from the spiral shaped light emitting tube 2 needs to be diffused by the diffusion film 20.
(3) The ultraviolet light outwardly radiated from the spiral shaped light emitting tube 2 is small or about 1% of the entire light as mentioned above, but ultraviolet light adversely affects outside environment in various manners as well known. For instance, a precious picture in a museum might change color even if a weak ultraviolet light is irradiated for a long period. The insects can easily see near ultraviolet light having a wavelength of about 420nm. In order to avoid the insects from gathering at the lamp, the ultraviolet light needs to be suppressed from going outside the lamp. Thus, the ultraviolet light is desirably cut (Absorbed) to lower than or equal to 25% with the diffusion film 20.
(4) The diffusion film 20 may increase the transmissivity of visible light the thinner it is applied, but skin failure may occur if applied thin. In order to reduce the skin failure of the diffusion film 20 by variation in manufacturing, the film thickness (applied amount) of the diffusion film 20 needs to be made thick to a certain extent. However, as described above, if the film thickness of the diffusion film 20 is made thick, the transmissivity of the visible light lowers, and thus a devisal is necessary such that the transmissivity of the visible light does not lower even if the film thickness of the diffusion film 20 is made thick.

The diffusion film 20 consists of TiO₂ and SiO₂. Titanium Dioxide P25 manufactured by Degussa was used for TiO₂. The film thickness of the diffusion film 20 and the average particle diameter of the SiO₂ were changed, and the visible light transmissivity and the ultraviolet light transmissivity at various mixed ratios of TiO₂ and SiO₂ were measured. The result is shown in Fig. 3. The average particle diameter of SiO₂ is the average of an aggregate particle diameter including primary particles.

The film thickness of the diffusion film 20 has four types; thick (3.0mg/cm²), slightly thick (2.0mg/cm²), slightly thin (1.0mg/cm²), thin (0.5mg/cm²). The application failure rate occurs frequently if the film thickness of the diffusion film 20 is thin (0.5mg/cm²). The application failure rate is improved if the film thickness of the diffusion film 20 is thick (3.0mg/cm²), slightly thick (2.0mg/cm²), or slightly thin (1.0mg/cm²).

The average particle diameter of SiO₂ is the average of the aggregate particle diameter including primary particles. The average particle diameter of SiO₂ has three types of fine (0.1µm), normal (1µm), and coarse (5µm).

There are twelve combinations as there are four types for the film thickness of the diffusion film 20 and the three types for the average particle diameter of SiO₂. The visible light transmissivity and the ultraviolet light transmissivity were measured while changing the mixed ratio of TiO₂ and SiO₂ for each combination.

If the mixed ratio of TiO₂ becomes large, the ultraviolet light transmissivity greatly lowers. If the film thickness of the diffusion film 20 becomes thin, the ultraviolet light transmissivity rises. If the mixed ratio of TiO₂ and SiO₂ and the film thickness of the diffusion film 20 are the same, the ultraviolet light transmissivity does not change even if the average particle diameter of SiO₂ is changed.

If the film thickness of the diffusion film 20 becomes thin, the visible light transmissivity rises. The visible light transmissivity barely changes even if the mixed ratio of TiO₂ and SiO₂ is changed. If the average particle diameter of SiO₂ becomes large, the visible light transmissivity rises. The present embodiment focuses on the fact that the visible light transmissivity rises when the average particle diameter of SiO₂ becomes large. When the average particle diameter of SiO₂ becomes large, a gap forms between the primary particles or the aggregate particles of SiO₂. The visible light transmissivity is thus assumed to rise.

If the average particle diameter of SiO₂ is 0.1µm, the mixed ratio of TiO₂ and SiO₂ that satisfies both the visible light transmissivity of greater than or equal to 95% and the ultraviolet light transmissivity of lower than or equal to 25% does not exist.

If the average particle diameter of SiO₂ is 1µm, the mixed ratio of TiO₂ and SiO₂ that satisfies both the visible light transmissivity of greater than or equal to 95% and the ultraviolet light transmissivity of lower than or equal to 25% exists when the film thickness of the diffusion film 20 is 1.0mg/cm² and 0.5mg/cm².

That is, when the film thickness of the diffusion film 20 is 1.0mg/cm² and the mixed ratio of SiO₂ is about 57 to 74 (hatching portion), both visible light transmissivity of greater than or equal to 95% and the ultraviolet light transmissivity of lower than or equal to 25% are satisfied.

Furthermore, when the film thickness of the diffusion film 20 is 0.5mg/cm² and the mixed ratio of SiO₂ is about 38 to 67% (hatching portion), both visible light transmissivity of greater than or equal to 95% and the ultraviolet light transmissivity of lower than or equal to 25- are satisfied. When the film thickness of the diffusion film 20 is 0.5mg/cm², the application failure rate may become large depending on the manufacturing condition. However, if the manufacturing technique is excellent, the application failure rate does not necessarily increase.

In any case, both visible light transmissivity of greater than or equal to 95% and the ultraviolet light transmissivity of lower than or equal to 25% are satisfied by having the average particle diameter of SiO₂ at 1µm and the film thickness of the diffusion film 20, and the mixed ration of TiO₂ and SiO₂ at predetermined values.

The mixed ratio of TiO₂ and SiO₂ that satisfies both visible light transmissivity of greater than or equal to 95% and the ultraviolet light transmissivity of lower than or equal to 25% exists when the film thickness of the diffusion film 20 is 3.0mg/cm², 2.0mg/cm², 1.0mg/cm², and 0.5mg/cm² when the average particle diameter of SiO₂ is 5µm.

That is, when the film thickness of the diffusion film 20 is 3.0mg/cm² and the mixed ratio of SiO₂ is about 93 to 98% (hatching portion), both visible light transmissivity of greater than or equal to 95% and the ultraviolet light transmissivity of lower than or equal to 25% are satisfied.

When the film thickness of the diffusion film 20 is 2.0mg/cm² and the mixed ratio of SiO₂ is about 81 to 87% (hatching portion), both visible light transmissivity of greater than or equal to 95% and the ultraviolet light transmissivity of lower than or equal to 25% are satisfied.

When the film thickness of the diffusion film 20 is 1.0mg/cm² and the mixed ratio of SiO₂ is about 50 to 76% (hatching portion), both visible light transmissivity of greater than or equal to 95% and the ultraviolet light transmissivity of lower than or equal to 25% are satisfied.

When the film thickness of the diffusion film 20 is 0.5mg/cm² and the mixed ratio of SiO₂ is about 19 to 67% (hatching portion), both visible light transmissivity of greater than or equal to 95% and the ultraviolet light transmissivity of lower than or equal to 25% are satisfied.

Thus, both visible light transmissivity of greater than or equal to 95% and the ultraviolet light transmissivity of lower than or equal to 25% are satisfied in a wide range of film thicknesses by having the average particle diameter of SiO₂ at 5µm and the film thickness of the diffusion film 20, and the mixed ratio of TiO₂ and SiO₂ at predetermined values.

Therefore, even if the film thickness of the diffusion film 20 is thick, the gap forms between the primary particles or the aggregate particles of SiO₂ by increasing the average particle diameter of SiO₂ to 1 to 5pm, and the visible light transmissivity enhances. With respect to the ultraviolet light transmissivity, even if the film thickness of the diffusion film 20 is thin, the ultraviolet light transmissivity becomes lower than or equal to 25% by mixing a predetermined amount of TiO₂ irrespective of the average particle diameter of SiO₂.

It should be apparent that similar effects as when the average particle diameter of SiO₂ is 5µm are obtained if greater than 5µm. However, the formation of the diffusion film 20 becomes difficult if the average particle diameter of SiO₂ is greater than 10µm.

Therefore, both visible light transmissivity of greater than or equal to 95% and the ultraviolet light transmissivity of lower than or equal to 25% are satisfied at a predetermined film thickness of the diffusion film 20 and mixed ratio of SiO₂ and TiO₂ as defined in the appended claim by having the average particle diameter of SiO₂ of 1 or 5 µm.

## Claims

1. A compact fluorescent lamp (1) having a light emitting tube (2) accommodated in an outer tube globe (6) and a diffusion film (20) for diffusing visible light radiated from said light emitting tube (2) and for absorbing ultraviolet light radiated from the light emitting tube (2) being formed on an inner surface of the outer tube globe (6)
**characterized in that**
the diffusion film (20) consists of TiO₂ and SiO₂, wherein the thickness of the diffusion film (20), the average particle diameter of SiO₂and the ratio of SiO₂ in the diffusion film (20) satisfy one of the combinations A, B, C, D, E or F listed in the table below:
| | Thickness of diffusion film | Average particle diameter of SiO₂ | Ratio of SiO₂ |
|---|---|---|---|
| Combination A | 0.5 mg/cm² | 1 µm | 38 to 67% |
| Combination B | 1.0 mg/cm² | 1 µm | 57 to 74% |
| Combination C | 0.5 mg/cm² | 5 µm | 19 to 67% |
| Combination D | 1.0 mg/cm² | 5 µm | 50 to 76% |
| Combination E | 2.0 mg/cm² | 5 µm | 81 to 87% |
| Combination F | 3.0 mg/cm² | 5 µm | 93 to 98% |

## Patentansprüche

1. Kompakte Fluoreszenzlampe (1) mit einer in einer äußeren Röhrenkugel (6) untergebrachten lichtemittierenden Röhre (2) und einem Diffusionsfilm (20) zum Streuen von von der lichtemittierenden Röhre (2) abgestrahltem sichtbarem Licht und zum Absorbieren von von der lichtemittierenden Röhre (2) abgestrahltem Ultraviolettlicht, der auf einer inneren Oberfläche der äußeren Röhrenkugel (6) ausgebildet ist,
**dadurch gekennzeichnet, dass**
der Diffusionsfilm (20) aus TiO₂ und SiO₂ besteht, wobei die Dicke des Diffusionsfilms (20), der mittlere Partikeldurchmesser von SiO₂ und das Verhältnis von SiO₂ in dem Diffusionsfilm (20) einer der in der folgenden Tabelle aufgeführten Kombinationen A, B, C, D, E oder F genügen:
| | Dicke des Diffusionsfilms | Mittlerer Partikeldurchmesser von SiO₂ | Verhältnis von SiO₂ |
|---|---|---|---|
| Kombination A | 0,5 mg/cm² | 1 µm | 38 bis 67% |
| Kombination B | 1,0 mg/cm² | 1 µm | 57 bis 74% |
| Kombination C | 0,5 mg/cm² | 5 µm | 19 bis 67% |
| Kombination D | 1,0 mg/cm² | 5 µm | 50 bis 76% |
| Kombination E | 2,0 mg/cm² | 5 µm | 81 bis 87% |
| Kombination R | 3,0 mg/cm² | 5 µm | 93 bis 98% |

## Revendications

1. Lampe fluorescente compacte (1) ayant un tube électroluminescent (2) logé dans un globe de tube extérieur (6) et un film de diffusion (20) pour diffuser la lumière visible émise à partir dudit tube électroluminescent (2) et pour absorber la lumière ultraviolette émise depuis le tube électroluminescent (2) qui est formé sur une surface intérieure du globe de tube extérieur (6)
**caractérisé en ce que**
le film de diffusion (20) se compose de TiO₂ et de SiO₂, l'épaisseur du film de diffusion (20), le diamètre particulaire moyen de SiO₂ et le rapport de SiO₂ dans le film de diffusion (20) satisfaisant à l'une des combinaisons A, B, C, D, E ou F répertoriées dans le tableau ci-dessous :
| | Epaisseur du film de diffusion | Diamètre particulaire moyen de SiO₂ | Rapport de SiO₂ |
|---|---|---|---|
| Combinaison A | 0,5 mg/cm² | 1 µm | 38 à 67 % |
| Combinaison B | 1,0 mg/cm² | 1 µm | 57 à 74 % |
| Combinaison C | 0,5 mg/cm² | 5 µm | 19 à 67 % |
| Combinaison D | 1,0 mg/cm² | 5 µm | 50 à 76 % |
| Combinaison E | 2,0 mg/cm² | 5 µm | 81 à 87 % |
| Combinaison F | 3,0 mg/cm² | 5 µm | 93 à 98 % |
